# EUROPÄISCHE PATENTSCHRIFT

(11) **EP 1 255 593 B1**
(45) Veröffentlichungstag und Bekanntmachung des Hinweises auf die Patenterteilung: **19.09.2007**
(21) Anmeldenummer: 01909543.9
(22) Anmeldetag: 18.01.2001
(51) Int. Cl.: A63F 9/06

(54) **LERN-, SPIEL- UND THERAPIEMATERIAL**
EDUCATIONAL, RECREATIONAL AND THERAPEUTIC MATERIAL
MATERIEL D'APPRENTISSAGE, DE JEU ET DE THERAPIE

(30) Priorität: 15.02.2000 DE 20002720 U
(43) Veröffentlichungstag der Anmeldung: 13.11.2002
(73) Patentinhaber: Weiden, Wolfgang, 53879 Euskirchen (DE)
(72) Erfinder: Weiden, Wolfgang, 53879 Euskirchen (DE)
(74) Vertreter: Priesmeyer, Thomas
(86) Internationale Anmeldenummer: PCT/DE2001/000356
(87) Internationale Veröffentlichungsnummer: WO 2001/060471

(56) Entgegenhaltungen:
- WO-A-98/09696
- US-A- 1 973 564
- US-A- 2 881 537
- US-A- 3 464 145
- US-A- 4 114 877
- US-A- 5 692 749

## Beschreibung

Die vorliegende Erfindung betrifft ein Lern-, Spiel- und Therapiematerial.

Für die genannten Zwecke Lernen, Spielen und Therapieren sind vielfältige und sehr unterschiedliche Materialien verfügbar, Sie werden eingesetzt in Schulen, Kindergärten, Arztpraxen, Kliniken oder privat, bei der Therapie von Kindern oder Erwachsenen, geistig und/oder körperlich behinderten Menschen, psychisch Gestörten oder Kranken, bei der Rehabilitation nach Unfällen, als Eignungstests usw.

Beispielsweise gehen aus der US 1,973,564 Spielsteine hervor, die an ihrer Oberseite mit linienförmigen Markierungen, beispielsweise in Form von Erhebungen oder von Vertiefungen, versehen sind. Die Steine können wiederum zu relativ komplex aufgebauten linienförmigen Mustern, Figuren oder Buchstaben zusammengesetzt werden. Mit Hilfe dieser Spielsteine soll unter anderem die Blindenschrift erlernt werden können.

Insbesondere für Personen mit Wahrnehmungsstörungen erscheinen bekannte Materialien jedoch nicht als geeignet.

Es ist daher Aufgabe der Erfindung, ein neuartiges Lern-, Spiel- und Therapiematerial zu schaffen, mit dem in einfacher Weise grundlegende Wahrnehmungsfähigkeiten erworben, ausgebaut und überprüft werden können.

Diese Aufgabe wird mit Lern-, Spiel- und Therapiematerial gelöst, welches aus verschiedenartigen Steinen mit einem unteren quaderförmigen Bereich und gegebenenfalls einem oberen Bereich, wobei der obere Bereich in Aufsicht im wesentlichen aus einfachen geometrischen Formen wie Quadraten, Rechtecken, Dreiecken, Rauten, Kreisen, Kreisabschnitten, Kreisringabschnitten, od. dgl. in positiv- oder negativ-Form ausgebildet ist und mindestens einer Arbeitsplatte zur Aufnahme mehrerer der Steine in Reihen und/oder Spalten besteht, *dadurch gekennzeichnet, dass* der untere Bereich eine Höhe von 0,8 cm und der obere Bereich eine Höhe von 2,0 cm aufweist.

Bevorzugte Ausführungsformen sind Gegenstand der Unteransprüche.

So ist es bevorzugt, wenn die Steine auf bzw. in den Arbeitsplatten mittels Randerhöhungen, Magnetkräften, Klettverschlüssen, Steckverbindungen od. dgl. gehalten werden. Ausreichend und besonders bevorzugt ist jedoch die Version mit Randerhöhungen an den Arbeitsplatten.

Es ist weiter bevorzugt, wenn der untere Bereich der Steine in Aufsicht quadratisch ausgebildet ist. Insbesondere in Zusammenwirken mit einer weiteren bevorzugten Ausführungsform, bei der die Arbeitsplatten zur Aufnahme von m x m Steinen mit m = {2, 3, ...} ebenfalls quadratisch ausgebildet sind, lassen sich so besonders vielfältige Anordnungsmöglichkeiten erzielen.

Vorteilhaft zur Verdeutlichung kleiner Anordnungen/Einheiten sind kleine Arbeitsplatten zur Aufnahme von 2 x 2 Steinen.

Eine weitere bevorzugte Ausführung sieht vor, daß mittlere Arbeitsplatten zur Aufnahme von n x n Steinen mit n = {3, 4 ...} und große Arbeitsplatten zur Aufnahme von mindestens p x p mittleren Arbeitsplatten mit p = {2, 3, ...} oder q x q kleinen Arbeitsplatten mit q = {3, 4, ...} vorgesehen sind. Hierdurch lassen sich kleinere Einheiten in größere Einheiten integrieren, auch sind Serienbildungen, Spiegelungen, Diagonale usw. möglich.

Besonders bevorzugt ist es, wenn die Steine sowie die kleinen, mittleren und großen Arbeitsplatten so aufeinander abgestimmt ausgebildet sind, daß anstelle der q x q kleinen Arbeitsplatten mit 2 x 2 Steinen oder der p x p mittleren Arbeitsplatten mit jeweils n x n Steinen auch r x r Steine mit r ≥ n*p auf der großen Arbeitsplatte angeordnet werden können. Hierdurch erhalten die Arbeitsplatten sozusagen eine Doppelfunktion. Zu einer Anordnungsmöglichkeit von r = n*p Steinen kann es dabei nur dann kommen, wenn die Steine nicht durch einen umlaufenden Rand in den Arbeitsplatten gehalten werden. Andernfalls ergeben sich durch den umlaufenden Rand zusätzliche Abmessungsvergrößerungen, die durch mindestens eine zusätzliche Steinreihe und -spalte aufgefangen werden muß.

Dies wird insbesondere bei einer besonders bevorzugten Ausführungsform (mit umlaufendem Rand) deutlich, bei der die mittleren Arbeitsplatten zur Aufnahme von 3 x 3 Steinen und die großen Arbeitsplatten wahlweise zur Aufnahme von 3 x 3 kleinen Arbeitsplatten, 2 x 2 mittleren Arbeitsplatten oder 7 x 7 Steinen ausgebildet sind. Die Ränder der kleinen Arbeitsplatten (jeweils sechs in Längs- und Querrichtung) bzw. die Ränder der mittleren Arbeitsplatten (jeweils vier in Längs- und Querrichtung) addieren sich zu der Abmessung einer zusätzlichen Steinreihe und -spalte, so daß nicht 6 x 6, sondern 7 x 7 Steine benötigt werden.

Eine bevorzugte Ausführungsform sieht außerdem auf die Steingröße bzw. die Arbeitsplatten abgestimmte Druckvorlagen vor. Hiermit ist gemeint, daß vorgegebene Muster zum Nacharbeiten auf Karten mit gedruckt werden. Diese können dann entweder einzeln oder z. B. mit Spiralbindung zu Heften verbunden vorgelegt werden. Durch die Abstimmung auf die Steingröße bzw. die Arbeitsplatten können einzelne Karten auch auf die Arbeitsplatten aufgelegt werden, so daß die aufgedruckten Muster leicht nacharbeitbar sind.

Damit die aufgelegten Druckvorlagen leicht wieder entfernt werden können, sollten die Arbeitsplatten ein etwa fingergroßes Loch in der Mitte aufweisen.

Die Erfindung wird nachstehend anhand bevorzugter Ausführungsformen unter Bezugnahme auf die beigefügten Zeichnungsfiguren näher erläutert, die folgendes zeigen:

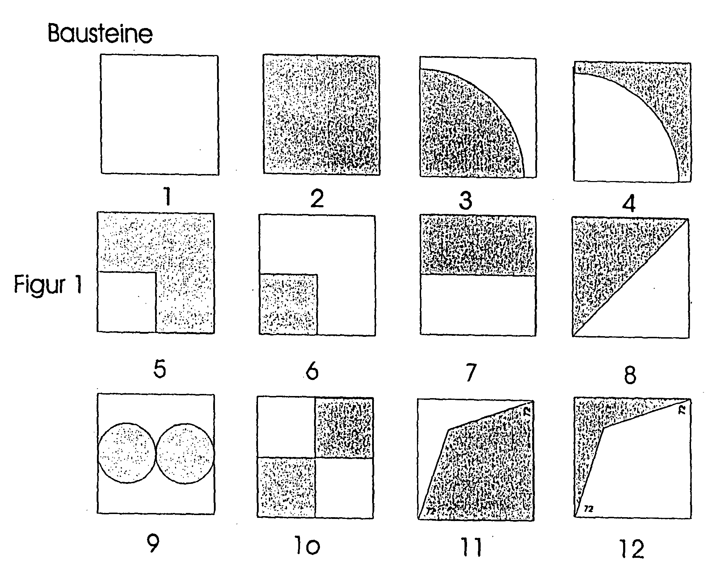

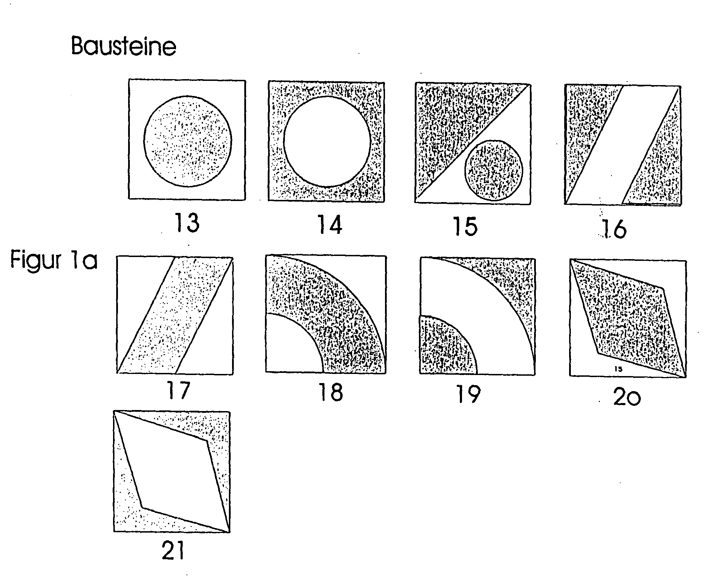

- Figuren 1 und 1a: zeigen 21 verschiedene Ausführungsformen von Steinen;
- Figur 2: zeigt eine beispielhafte Anordnung von Steinen innerhalb einer kleinen Arbeitsplatte;
- Figur 3: zeigt eine weitere beispielhafte Anordnung von Steinen innerhalb einer kleinen Arbeitsplatte;
- Figur 4: zeigt die Anordnung von 2 x 2 mittleren Arbeitsplatten auf einer großen Arbeitsplatte;
- Figur 5: zeigt die Anordnung von 3 x 3 kleinen Arbeitsplatten auf einer großen Arbeitsplatte;
- Figur 6: zeigt die Anordnung von 7 x 7 Steinen auf der großen Arbeitsplatte; und
- Figur 7: zeigt eine beispielhafte Anordnung von Steinen innerhalb einer mittleren Arbeitsplatte.

Unter der Bezugsziffer 1 ist ein Stein dargestellt, der nicht Teil der Erfindung ist. Er besteht aus einem Quader mit quadratischer Grundfläche von z.B. 4cm x 4cm und ist z. B. 0,8cm hoch. Auf diesem unteren Bereich ist kein oberer Bereich ausgebildet, so daß dieser Stein eine Art Platzhalterfunktion auf der Arbeitsplatte (s. u.) erfüllt. Er ist vorzugsweise aus Holz, beispielsweise aus Buchenholz, in handwerklich üblicher Weise gefertigt.

Der Stein 2 weist im Unterschied zu dem Stein 1 eine größere Höhe von z. B. 0,8cm + 2cm = 2,8cm, also einen oberen Bereich, auf. Diese erfüllt mithin die Funktion eines Quadrats. Der obere Bereich kann auf dem unteren Bereich durch z. B. Verleimen befestigt werden. Es ist jedoch auch möglich, den Stein 2 einstückig auszubilden. Gleiches gilt für alle nachfolgend beschriebenen Steine, wobei die zweiteilige (oder mehrteilige) Fertigung mit anschließendem Verbinden im Regelfalle aus fertigungstechnischen Gründen bevorzugt sein dürfte.

Alle weiteren Steine 3 bis 21 werden in der gleichen Höhe von 0,8cm für den unteren Bereich und 2cm für den oberen Bereich ausgebildet. Wie aus den Figuren ersichtlich weisen diese die Form Dreieck 8, halbes Quadrat = Rechteck 7, Kreisabschnitt (hier: Viertelkreis) 3, Kreisabschnitt (hier: Viertelkreis) in negativ-Darstellung 4, L-Form 5, Kreisringabschnitt (hier: Viertelkreisringabschnitt) 18, 19, ein kleines Quadrat 6, zwei kleine Quadrate 10, zwei kleine Kreise 9, zwei Kreise 13, 14 , Dreieck plus kleiner Kreis 15, zwei Viertel-Achtecke 11, 12, zwei parallele Schräge 16, 17 und zwei Rauten 20, 21 auf.

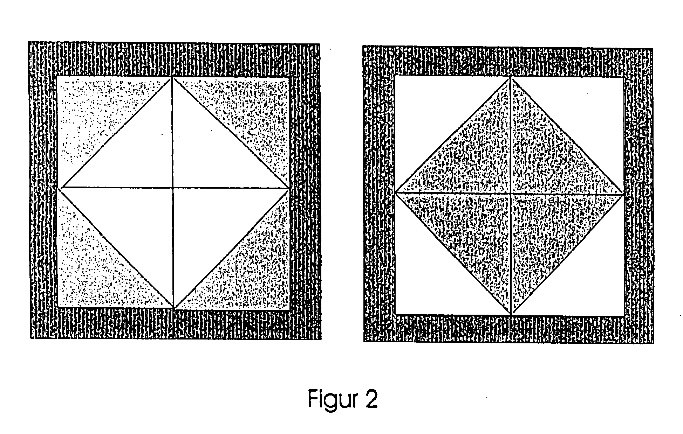

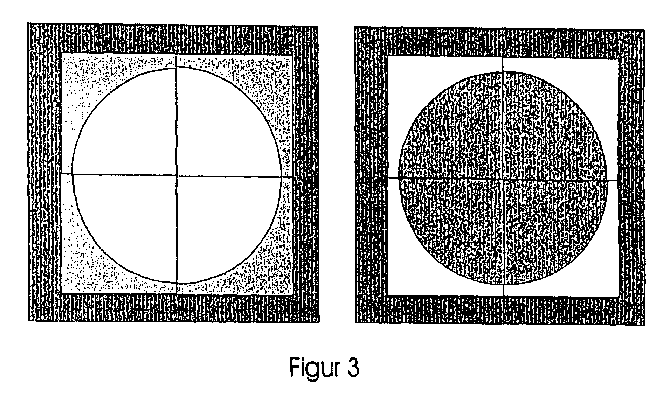

In den Figuren 2 und 3 ist dargestellt, wie diese Steine auf einer kleinen Arbeitsplatte 22 angeordnet werden können. Die kleine Arbeitsplatte 22 besteht aus einer quadratischen Platte (Maße hier 9,3cm x 9,3cm x 0,5cm mit umlaufendem Rand 25 von 0,63cm Breite und 0,8cm Höhe). Der Rand 25 sorgt dafür, daß die lose aufgesetzten Steine in ihrer Lage bleiben und nicht von der kleinen Arbeitsplatte 22 rutschen. Dargestellt in Figur 2 ist die Bildung eines negativen und eines positiven Quadrates aus jeweils vier Steinen 8. In Figur 3 ist die Bildung eines negativen und eines positiven Kreises aus jeweils vier Steinen 3, 4 dargestellt.

Die mittlere Arbeitsplatte 23 (Maße hier 14cm x 14cm x 0,5cm mit umlaufendem Rand von 1cm Breite und 0,8cm Höhe) und die große Arbeitsplatte 24 (Maße hier 30cm x 30cm x 0,5cm mit umlaufendem Rand von 1cm Breite und 0,8cm Höhe) sind in gleicher Weise wie die kleine Arbeitsplatte 22 ausgebildet. Zu beachten ist jedoch der Unterschied in den Abmessungen der umlaufenden Ränder, der erforderlich ist, um 2 x 2 mittlere Arbeitsplatten 23 oder 3 x 3 kleine Arbeitsplatten 22 oder 7 x 7 Steine auf der großen Arbeitsplatte 24 anzuordnen.

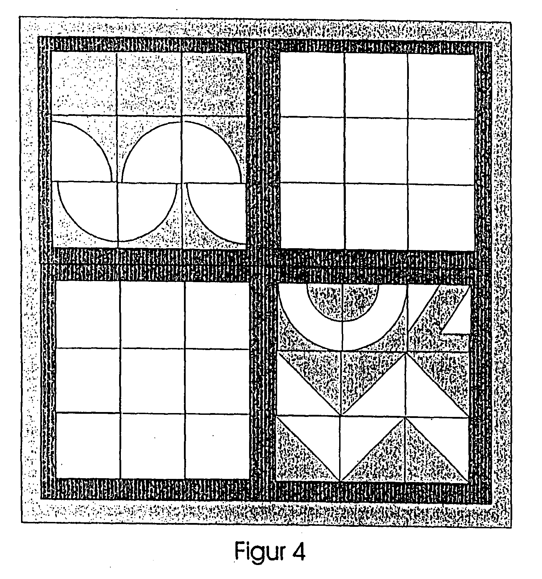

Figur 4 zeigt die Anordnung von 2 x 2 mittleren Arbeitsplatten 23 auf der auf der großen Arbeitsplatte 24 sowie die Anordnung von 3×3 Steinen innerhalb der mittleren Arbeitsplatten 23. Es ist erkennbar, wie durch Kombination von einfachen Steinen auch komplexe Gebilde wie eine Zickzack-Straße oder eine Schlangenlinie zusammengesetzt werden kann.

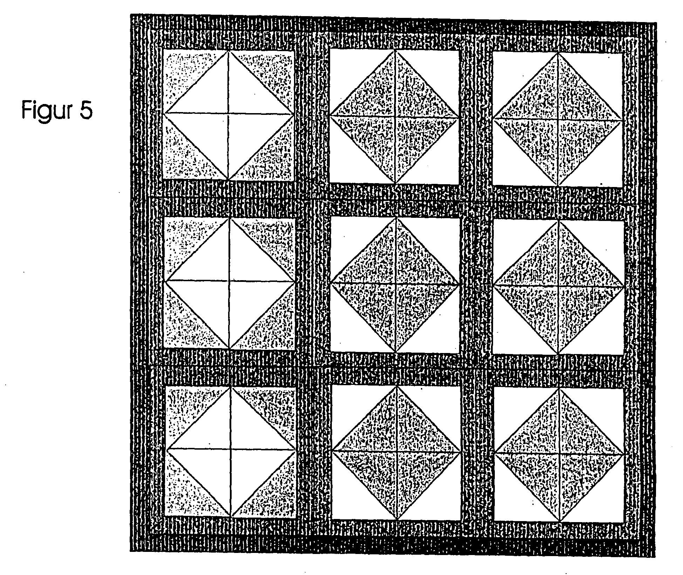

Wie Figur 5 zeigt, können auch 3 x 3 kleine Arbeitsplatten 22 auf der großen Arbeitsplatte 24 angeordnet werden.

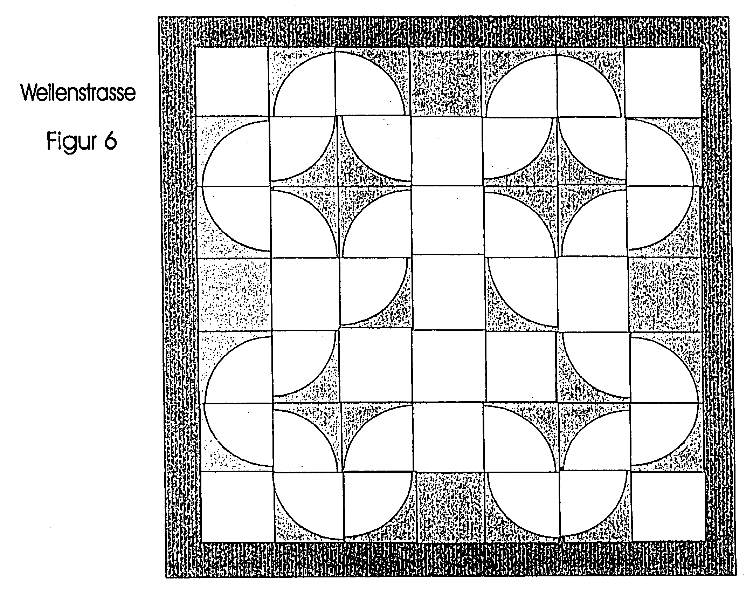

Figur 6 zeigt, daß auf der großen Arbeitsplatte 24 auch 7 x 7 Steine angeordnet werden können und nahezu unbegrenzte gestalterische Möglichkeiten bieten. Sollten selbst diese nicht ausreichen, steht Erweiterungen durch noch größere Arbeitsplatten nichts entgegen.

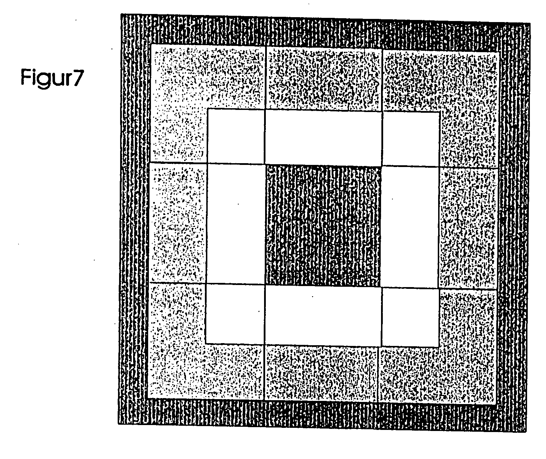

Figur 7 zeigt, wie 3 x 3 Steine innerhalb der mittleren Arbeitsplatte 23 angeordnet werden können.

Vorteilhaft ist es auch, wenn die große Arbeitsplatte 24 einen umlaufenden Rand aufweist, auf dem sich ein Deckel abstützt Der Deckel sollte so ausgebildet sein, daß er die große Arbeitsplatte einschließlich aller Steine abdeckt, so daß dies vor Verschmutzung und Verlust geschützt sind.

### Wie kann dieses Material nun gezielt eingesetzt werden?

### Inhalte des Lernen - Zielbestimmung

Die Vielzahl der unterschiedlichen Steine mit ihren unterschiedlichen, geometrischen Formen provozieren durch ihre klare Einfachheit zu spontanem handelnden Tun. Mit und über das "begreifende" Tun erwirbt das Kind unbewußt die dem Material innewohnende Ordnung.
- Es "begreift" förmlich die innere Ordnung des Materials, die es dann auf die ihn umgebende äußere Ordnung übertragen lernt;
- Es lernt über das Material grundlegende Handlungs-, Denk-, und Sprachmuster;
- Spontan gebaute Ganzheiten werden in Einzelteile zerlegt - Einzelteile zu Ganzheiten zusammengesetzt;
- Fehlende Einzelteile werden gesucht, gefunden und zu einer Komposition zusammengefügt;
- Einzelne Formen werden geordnet und sortiert;
- Non-verbale bzw. verbale Sprachmuster werden bei einer partnerschaftlichen Problembewältigung entwickelt, angewendet und erlernt, u.a. "das paßt nicht", "oben ist es rund", "es muß gedreht werden". Ein unbewußtes Satzmustertraining - Aussagesätze, Feststellen von Eigenschaften, ist die Folge;
- Aufmerksamkeit und Konzentration werden trainiert;
- Lösungen durch Versuch und Irrtum werden selbständig entwickelt;

Neben diesen positiven Auswirkungen finden wir auch unmittelbare Bezugspunkte zu den Lehrplänen im mathematischen Bereich. (Steiner: Mathematik als Denkerziehung).

Handlungs-, Denk- und Sprachmuster helfen strukturierte, dynamische Zahlenvorstellungen beim Schüler aufzubauen. So bewirkt handlungsbegleitendes Sprechen
- die bewußte Kontrolle motorischer Leistungen;
- verbesserte Prozesse beim Problemlösen (durch lautes Denken) - Die Fähigkeit, Handlungen gedanklich beschreibend zu planen (Handlungsabläufe werden geistig vorweggenommen);
- überlegtes Handeln; als Folge kann das Kind (muß aber nicht) sich selbst zu neuen Erkenntnissen und Fähigkeiten führen (Kreativität) (Anmerkung: Vielen Kinder bereitet Sprechen und Handeln große Probleme);

### Betrachten wir nun das Set mit neun Steinen (Figur 7).

Die Zusammensetzungen der einzelnen Elemente entstehen oft zufällig. Beispielsweise besteht das hier gezeigte, nachzubauende Vorbild aus zwei (4) rechtwinkligen, vier (4) geraden und einer (1) quadratischen Form. Vier rechtwinklige Steine allein ergeben nicht das nachzubildende Vorbild. Ebenso führen zwei rechtwinklige, vier abgerundete und zwei quadratischen Steine nicht zum geforderten Ziel. Erst die genaue vorgegebene Anzahl von ganz bestimmten Steine 4,4,1 führt zum Erfolg. Hintergründig wird dem Kind klar: Die Menge neun (9) setzt sich aus 4+4+1 zusammen. Andere Vorlagen führen zur Erkenntnis 9 = 3+4+2 oder 6+2+1 oder 3+3+3

Das erfindungsgemäße Lern-, Spiel- und Therapiematerial entspricht den in Lehrplänen geforderten Lernschritten.

Typische Einsatzmöglichkeiten des Materials sind:
1. Bilden von Klassifikationen, Gruppen und Untergruppen, d. h. Finden gleichartiger Steine in einer Vielzahl von anderen;
   1.1. Aussortieren gleicher Steine;
   1.2. Verbinden gleicher Steine mit Wollfäden;
   1.3. Ertasten gleicher Steine in Fühlsäcken oder -kisten;
   1.4. Einsammeln von gleichen Steinen mit Hilfe von Rollbrett und Balancierstange. Dadurch SI -Training: kinästhetische, vestibuläre sowie propriozeptive Stimulation;
2. Merkmale von bestimmten Gegenständen feststellen.
   2.1. Erkennen und Benennen von Formen wie Raute, Rombus, Dreieck, Viereck, Quadrat und Rechteck, Einübung von Begriffen wie: eckig, spitz, gerade, rund, Zickzack;
   2.2. Erfassen von runden Formen: Mit vier oder neun Steinen können runde Formen in positiver und negativer Darstellungsform gebaut werden. Eine Kugel hineingelegt kann das Wesen des Kreisrunden verdeutlichen. Begriffe, wie Kreis, rund und rollen, können erlernt werden.
   2.3. Erfassen von eckigen Formen: Mit dem Bau einer Treppe oder einer Zickzackstra-βe kann das Problem verinnerlicht werden.
   2.4. Erfassen von viereckigen Formen: Mit vier Steinen können unterschiedlichste viereckige Formen in positiver und negativer Darstellungsform gebaut werden. Durch das Bauen mit dreieckigen Steinen entsteht nicht nur ein Quadrat, sondern eines in anders gelagerter Darstellungsform. Dadurch werden Raumlageerfahrungen gefördert. (WK) Begriffe, wie Quadrat, Viereck, Ecken etc. können angewendet, Rechtecke gebaut werden. Dadurch werden, die unterschiedlichen Wesensmerkmale zum Quadrat spielerisch verdeutlicht. Ein Rechteck hat zwei längere Seiten. Positive, sowie negative Darstellung der einzelnen Formen verinnerlichen den Erkenntnisvorgang. Bei Verwenden von 16 Steinen sind die Unterschiede von Quadrat und Rechteck besonders gut erkennbar. Ebenso kann die Veränderung der RL (Raumlage) gut verdeutlicht werden.
   2.5. Erfassen von dreieckigen Formen: Dreieckige Formen aus unterschiedlichen Formen aussuchen; große Dreiecke aus drei dreieckigen und drei quadratischen Steinen bauen lassen; Mit vier oder neun Steinen ein kleines oder großes Haus bauen lassen. Positive, sowie negative Darstellungsweise ist bei allen Formen möglich. Parallel können Dinge gleicher Form aus der Umwelt gesucht werden.
3. Gruppen und Untergruppen nach erarbeiteten Merkmalen bilden: Hier werden die vorher beschriebenen Lernziele begrifflich geordnet, Merkmale hervorgehoben und gefestigt und somit das Denken geschult.
   3.1. Ordnen nach Form: Dreiecke, Vierecke und Kreise etc. werden in Fühlkisten ertastet und verbal beschrieben (taktile Figurunterscheidung);
   3.2. Zuorden nach Größe: Verschiedene Größen können ertastet und beschrieben werden; positive und negative Darstellungen sind möglich; Begriffe, wie rund, eckig, größer als, kleiner als, lange Seiten, kurze Seiten werden erlernt;
4. Raumbegriffe gewinnen: Begriffe wie oben, unten, in, rechts, links, innen oder außen können erarbeitet werden. (Anmerkungen: Grundsätzlich bildet sich der Raumbegriff des Kindes über den eigenen Körper. Koordinatensystem). Über Sehen, Fühlen beschreibt das Kind, daß das Dach oben ist; der Kreis innen bzw. außen fühlbar ist. Daß eine Kugel, die eine Treppe herunter rollt zuerst oben ist, dann unten liegt.
5. Raum fühlen und Grenzen erfahren: Über das Bauen und Fühlen geschlossener Räume mit dem Material kann auch dieser geforderte Bereich erfühlt, ergriffen, erfahren werden. Es versteht sich von selbst, daß zunächst der Arbeitsraum des Kindes ganzkörperlich erfahren werden muß. Gehen durch den Raum, Ertasten der Wände etc.
6. Bilden von Seriation (Reihe): Durch den Bau von kleinen Quadraten, die immer größer werden kann diese Forderung verinnerlicht werden. Das Material erfährt seine Grenze nur durch die Zahl der verfügbaren Steine.
7. Grundsatz der Mengenerhaltung erkennen: Das Material kann diesen Anspruch voll erfüllen. Durch den umschlossenen Raum der Arbeitsplatten wird das Kind zur Erkenntnis geführt: Die Mächtigkeit einer Menge verändert sich durch räumliches Umordnen nicht (Invarianz).
8. Erfahren von Zerlegen und Zusammensetzen (Schulen des synthetischen Denkens).
9. Erfahren von Spiegeldarstellungen, Diagonale und Ähnlichkeiten.

### BEZUGSZIFFERNLISTE

- 1: Stein, blanko
- 2: Stein, Quadrat
- 3: Stein, Viertelkreis
- 4: Stein, Viertelkreis, negativ
- 5: Stein, L-Form
- 6: Stein, ein kleines Quadrat
- 7: Stein, Rechteck
- 8: Stein, Dreieck
- 9: Stein, zwei kleine Kreise
- 10: Stein, zwei kleine Quadrate
- 11: Viertel-Achteck positiv
- 12: Viertel-Achteck negativ
- 13: Stein, großer Kreis positiv
- 14: Stein, großer Kreis negativ
- 15: Stein, Dreieck plus kleiner Kreis
- 16: Stein, parallele Schräge positiv
- 17: Stein, parallele Schräge negativ
- 18: Stein, Kurve positiv (Stein, Viertelkreisring)
- 19: Stein, Kurve negativ (Stein, Viertelkreisring)
- 20: Stein, Raute positiv
- 21: Stein, Raute negativ
- 22: Arbeitsplatte, kleine (mit jeweils einem fingergroßen Loch in der Mitte)
- 23: Arbeitsplatte, mittlere (mit jeweils einem fingergroßen Loch in der Mitte)
- 24: Arbeitsplatte, große (mit jeweils einem fingergroßen Loch in der Mitte)
- 25: Rand, umlaufender

## Patentansprüche

1. Lern-, Spiel- und Therapiematerial, bestehend aus verschiedenartigen Steinen (1 - 21) mit einem unteren quaderförmigen Bereich und gegebenenfalls einem oberen Bereich, der in Aufsicht im Wesentlichen aus einfachen geometrischen Formen ausgebildet ist und mindestens einer Arbeitsplatte (22, 23 ,24) zur Aufnahme mehrerer der Steine (1 - 21) in Reihen und/oder Spalten, ***dadurch gekennzeichnet, dass*** der untere Bereich eine Höhe von 0,8 cm und der obere Bereich eine Höhe von 2,0 cm aufweist.

2. Lem-, Spiel- und Therapiematerial nach Anspruch 1, **dadurch gekennzeichnet, daß** die Steine (1 -21) auf bzw. in den Arbeitsplatten (21, 22, 23) mittels Randerhöhungen, Magnetkräften, Klettverschlüssen, Steckverbindungen od. dgl. gehalten werden.

3. Lern-, Spiel- und Therapiematerial nach einem der Ansprüche 1 oder 2, **dadurch gekennzeichnet, daß** der untere Bereich der Steine (1 - 21) in Aufsicht quadratisch ausgebildet ist.

4. Lern-, Spiel- und Therapiematerial nach einem der vorhergehenden Ansprüche, **dadurch gekennzeichnet, daß** die Arbeitsplatten (21, 22, 23) zur Aufnahme von m x m Steinen (1 - 21) mit m = {2, 3, ...} quadratisch ausgebildet sind.

5. Lern-, Spiel- und Therapiematerial nach einem der vorhergehenden Ansprüche, **gekennzeichnet durch** kleine Arbeitsplatten (21) zur Aufnahme von 2 x 2 Steinen (1 - 21).

6. Lern-, Spiel- und Therapiematerial nach einem der vorhergehenden Ansprüche, **gekennzeichnet durch** mittlere Arbeitsplatten (23) zur Aufnahme von n x n Steinen (1-21) mit n = {3, 4 ...} und große Arbeitsplatten (24) zur Aufnahme von mindestens p x p mittleren Arbeitsplatten (23) mit p = {2, 3, ...} oder q x q kleinen Arbeitsplatten (22) mit q ={3, 4, ...}.

7. Lern-, Spiel- und Therapiematerial nach einem der vorhergehenden Ansprüche, **dadurch gekennzeichnet, daß** die Steine (1- 21) sowie die kleinen, mittleren und großen Arbeitsplatten (22, 23, 24) so aufeinander abgestimmt ausgebildet sind, daß anstelle der q x q kleinen Arbeitsplatten (22) mit 2 x 2 Steinen (1 - 21) oder der p x p mittleren Arbeitsplatten (23) mit jeweils n x n Steinen (1 - 21) auch r x r Steine (1 - 21) mit r ≥ n*p auf der großen Arbeitsplatte (24) angeordnet werden können.

8. Lern-, Spiel- und Therapiematerial nach einem der vorhergehenden Ansprüche, **dadurch gekennzeichnet, daß** die mittleren Arbeitsplatten (23) zur Aufnahme von 3 x 3 Steinen (1 - 21) und die großen Arbeitsplatten (24) wahlweise zur Aufnahme von 3 x 3 kleinen Arbeitsplatten (22), 2 x 2 mittleren Arbeitsplatten (23) oder 7 x 7 Steinen (1 - 21)ausgebildet sind.

9. Lern-, Spiel- und Therapiematerial nach einem der vorhergehenden Ansprüche, **gekennzeichnet durch** auf die Steingröße bzw. die Arbeitsplatten (22, 23, 24) abgestimmte Druckvorlagen.

10. Lern-, Spiel- und Therapiematerial nach einem der vorhergehenden Ansprüche, **dadurch gekennzeichnet, daß** die Arbeitsplatten (22, 23, 24) ein etwa fingergroßes Loch in der Mitte aufweisen.

11. Lern-, Spiel- und Therapiematerial nach einem der vorhergehenden Ansprüche, **dadurch gekennzeichnet, daß** die großen Arbeitsplatte (24) mit einem umlaufenden Rand zur Abstützung eines Deckels versehen sind.

## Claims

1. Educational, recreational and therapeutic material, consisting of various tiles (1 - 21) comprising a lower parallelepiped region and optionally an upper region, which, when viewed from the top, is configured substantially from simple geometrical shapes, and at least one worktop (22, 23, 24) for receiving a plurality of the tiles (1 - 21) in rows and/or columns, **characterised in that** the lower region has a height of 0.8 cm and the upper region has a height of 2.0 cm.

2. Educational, recreational and therapeutic material according to claim 1, **characterised in that** the tiles (1 - 21) are held on or in the worktops (21, 22, 23) using raised edges, magnetic forces, hook-and-loop fasteners, plug-type connectors or the like.

3. Educational, recreational and therapeutic material according to either claim 1 or claim 2, **characterised in that** the lower region of the tiles (1 - 21) is, when viewed from above, of square configuration.

4. Educational, recreational and therapeutic material according to any one of the preceding claims, **characterised in that** the worktops (21, 22, 23) are of square configuration for receiving m x m tiles (1 - 21), wherein m = {2, 3, ... }.

5. Educational, recreational and therapeutic material according to any one of the preceding claims, **characterised by** small worktops (21) for receiving 2 x 2 tiles (1 - 21).

6. Educational, recreational and therapeutic material according to any one of the preceding claims, **characterised by** medium-sized worktops (23) for receiving n x n tiles (1 - 21), wherein n = {3, 4, ... }, and large worktops (24) for receiving at least p x p medium-sized worktops (23), wherein p = {2, 3, ... }, or q x q small worktops (22), wherein q = {3, 4, ... }.

7. Educational, recreational and therapeutic material according to any one of the preceding claims, **characterised in that** the tiles (1 - 21) and the small, medium-sized and large worktops (22, 23, 24) are adapted to one another in such a way that instead of the q x q small worktops (22) comprising 2 x 2 tiles (1 - 21) or the p x p medium-sized worktops (23) each comprising n x n tiles (1 - 21), r x r tiles (1 - 21), wherein r ≥ n*p, can also be arranged on the large worktop (24).

8. Educational, recreational and therapeutic material according to any one of the preceding claims, **characterised in that** the medium-sized worktops (23) are configured for receiving 3 x 3 tiles (1 - 21) and the large worktops (24) are configured selectively for receiving 3 x 3 small worktops (22), 2 x 2 medium-sized worktops (23) or 7 x 7 tiles (1 - 21).

9. Educational, recreational and therapeutic material according to any one of the preceding claims, **characterised by** imprints adapted to the tile size or the worktops (22, 23, 24).

10. Educational, recreational and therapeutic material according to any one of the preceding claims, **characterised in that** the worktops (22, 23, 24) have in their centre a substantially finger-sized hole.

11. Educational, recreational and therapeutic material according to any one of the preceding claims, **characterised in that** the large worktops (24) are provided with a peripheral edge for supporting a lid.

## Revendications

1. Matériel pédagogique, de jeu et thérapeutique, composé de différents blocs (1-21) ayant une partie inférieure quadrangulaire et une partie supérieure qui se compose pour l'essentiel, en vue de dessus, de formes géométriques simples et avec au moins un plateau de travail (22, 23, 24) destiné à recevoir plusieurs des blocs (1-21) dans des lignes et/ou des colonnes, **caractérisé en ce que** la partie inférieure a une hauteur de 0,8 cm et la partie supérieure une hauteur de 2,0 cm.

2. Matériel pédagogique, de jeu et thérapeutique selon la revendication 1, **caractérisé en ce que** les blocs (1-21) sont retenus dans les plateaux de travail (21, 22, 23) au moyen de bords surélevés, de forces magnétiques, de fixations auto-agrippantes, d'emboîtements ou similaires.

3. Matériel pédagogique, de jeu et thérapeutique selon l'une des revendications 1 ou 2, **caractérisé en ce que** la partie inférieure des blocs (1-21) a une forme carrée en vue de dessus.

4. Matériel pédagogique, de jeu et thérapeutique selon l'une des revendications précédentes, **caractérisé en ce que** les plateaux de travail (21, 22, 23) ont une forme carrée permettant de recevoir m x m blocs (1-21) avec m = {2, 3, ...}.

5. Matériel pédagogique, de jeu et thérapeutique selon l'une des revendications précédentes, **caractérisé en ce qu'**il comprend des petits plateaux de travail (21) destinés à recevoir 2 x 2 blocs (1-21).

6. Matériel pédagogique, de jeu et thérapeutique selon l'une des revendications précédentes, **caractérisé en ce qu'**il comprend des plateaux de travail moyens (23) destinés à recevoir n x n blocs. (1-21) avec n = {3, 4 ...} et des grands plateaux de travail (24) destinés à recevoir au moins p x p plateaux de travail moyens (23) avec p = {2, 3, ...} ou q × q petits plateaux de travail (22) avec q = {3, 4, ...}.

7. Matériel pédagogique, de jeu et thérapeutique selon l'une des revendications précédentes, **caractérisé en ce que** les blocs (1-21) et les petits, moyens et grands plateaux de travail (22, 23, 24) sont adaptés les uns aux autres de telle manière qu'au lieu des q × q petits plateaux de travail (22) avec chacun 2 × 2 blocs (1-21) ou des p × p plateaux de travail moyens (23) avec chacun n × n blocs (1-21), il est possible aussi de disposer r × r blocs (1-21) avec r ≥ n*p sur le grand plateau de travail (24).

8. Matériel pédagogique, de jeu et thérapeutique selon l'une des revendications précédentes, **caractérisé en ce que** les plateaux de travail moyens (23) sont conçus pour recevoir 3 × 3 blocs (1-21) et les grands plateaux de travail (24) pour recevoir au choix 3 × 3 petits plateaux de travail (22), 2 × 2 plateaux de travail moyens (23) ou 7 × 7 blocs (1-21).

9. Matériel pédagogique, de jeu et thérapeutique selon l'une des revendications précédentes, **caractérisé en ce qu'**il comprend des modèles imprimés adaptés à la taille des blocs ou aux plateaux de travail (22, 23, 24).

10. Matériel pédagogique, de jeu et thérapeutique selon l'une des revendications précédentes, **caractérisé en ce que** les plateaux de travail (22, 23, 24) présentent en leur milieu un trou approximativement de la taille d'un doigt.

11. Matériel pédagogique, de jeu et thérapeutique selon l'une des revendications précédentes, **caractérisé en ce que** les grands plateaux de travail (24) sont pourvus d'un bord continu destiné à supporter un couvercle.
